# EUROPEAN PATENT SPECIFICATION

(11) **EP 3 954 870 B1**
(45) Date of publication and mention of the grant of the patent: **07.02.2024**
(21) Application number: 20191031.2
(22) Date of filing: 14.08.2020
(51) Int. Cl.: F01D 9/02

(54) **TRANSITION DUCT FOR A GAS TURBINE PLANT AND GAS TURBINE PLANT COMPRISING SAID TRANSITION DUCT**
ÜBERGANGSKANAL FÜR EINE GASTURBINENANLAGE UND GASTURBINENANLAGE MIT DIESEM ÜBERGANGSKANAL
CONDUIT DE TRANSITION POUR UNE CENTRALE À TURBINE À GAZ ET CENTRALE À TURBINE À GAZ COMPRENANT LEDIT CONDUIT DE TRANSITION

(43) Date of publication of application: 16.02.2022
(73) Proprietor: Ansaldo Energia Switzerland AG, 5400 Baden (CH)
(72) Inventor: MAURER, Michael Thomas, 79713 BAD SÄCKINGEN (DE); MATHEWS, Hans-Christian, 8057 ZÜRICH (CH); BUNKUTE, Birute, 5415 NUSSBAUMEN (CH)
(74) Representative: Studio Torta S.p.A.

(56) References cited:
- EP-A1- 2 623 744
- EP-A1- 2 960 436
- EP-A1- 3 287 610
- JP-A- 2008 274 774

## Description

### TECHNICAL FIELD

The present invention relates to a transition duct for a gas turbine plant and to a gas turbine plant comprising said transition duct.

### BACKGROUND

As is known, a gas turbine plant comprises a compressor, a combustor assembly, which includes a plurality of can combustors arranged circumferentially about a main axis, and a turbine, where exhaust hot gases produced in the combustor assembly are expanded to convert thermal and kinetic energy of the hot gas flow into mechanical energy.

The can combustors are fluidly coupled to the turbine through respective transition ducts, which are generally provided as tubular bodies having an upstream end at an outlet of the respective combustor can and a downstream end at an inlet of the turbine section.

The transition ducts are configured to guide the hot gas flow from the combustor outlet to the turbine inlet and are thus exposed to extremely high temperatures. In some kinds of gas turbines, for example, the temperature of hot gas may reach 1800 K. As other components of gas turbines, also transition ducts therefore require cooling to avoid damages caused by overheating and to increase lifetime.

For the purpose of cooling the transition ducts, a relatively fresh airflow is usually taken from a plenum arranged around the combustor assembly. The air in the plenum comes from the compressor.

However in the existing solutions requires quite a large airflow needs to be subtracted from the overall airflow processed by the compressor in order to provide a given cooling effect. This implies a loss of efficiency of the gas turbine. Some solutions are disclosed in documents EP290436, EP3287610, EP2623744.

However, the existing solutions are not able to adequately cool the downstream portion of the transition duct, at the connection with the turbine section of the gas turbine engine.

### SUMMARY OF THE INVENTION

It is an aim of the present invention to provide a transition duct for a gas turbine plant which allows to overcome or at least attenuate the limitations above described.

According to the present invention, there is provided a transition duct comprising:
a tubular body having an upstream end configured to be coupled to a combustor of a gas turbine plant and a downstream end configured to be coupled to a turbine of the gas turbine plant; the tubular body comprising:
an outer wall;
an inner wall defining a transition channel;
at least one first convective cooling channel arranged between the inner wall and the outer wall; the first convective cooling channel having at least one first inlet made in the outer wall between the upstream end and the downstream end in communication with a source of cooling fluid; the first convective cooling channel comprising at least one inlet portion comprising the first inlet, a main portion and at least one bent portion arranged between the inlet portion and the main portion; wherein in the inlet portion the cooling fluid flows in a first direction and in the main portion the cooling fluid flows in a second direction different from the first direction.

Thanks to the presence of a bent portion able to deflect the flow of cooling fluid in a different direction in the same convective cooling channels the cooling of the transition duct is optimized.

According to the present invention, the first direction is from the upstream end towards the downstream end and the second direction is from the downstream end towards the upstream end. In this way the flow of cooling fluid is moved substantially in opposite directions.

According to the present invention, the bent portion is arranged at the downstream end. In this way the cooling of the downstream end can be optimized as the cooling effect of the bent portion is greater. In the bent portion, in fact, a lot of turbulence is introduced and the heat transfer increases. It is therefore beneficial to place the bent portion at the area normally subjected to high heat load.

According to an embodiment of the present invention, the radial height of at least one section of the inlet portion of the first convective cooling channel decreases along the first direction. In this way, the cooling flow is accelerated and provides additional heat transfer increase. This solution is also compatible with the geometrical constraints due to the presence of the picture frame.

According to an embodiment of the present invention, the transition duct comprising a picture frame coupled to a portion of an outer surface of the outer wall of the tubular body; the portion of the outer surface of the outer surface being arranged at the section of the inlet portion of the first convective cooling channel. In this way, the zone under the picture frame is better cooled via the acceleration of the narrowing cooling channel.

According to an embodiment of the present invention the inlet portion comprises a further section having a constant radial height; the further section being upstream the section along the first direction and comprising the at least one first inlet.

According to an embodiment of the present invention, the radial height of the bent portion is constant.

According to an embodiment of the present invention, the radial height of the bent portion is lower than the width of the bent portion.

According to an embodiment of the present invention, the radial height of the main portion is in the same range as the width of the main portion.

According to an embodiment of the present invention, the bent portion is substantially U-shaped.

According to an embodiment of the present invention, the inlet portion and the main portion extend substantially parallel.

According to an embodiment of the present invention, the at least one bent portion is provided with a plurality of fins, extending transversally to the first direction and to the second direction.

According to an embodiment of the present invention, the transition duct the at least one first convective cooling channel comprises at least one further first inlet made in the outer wall between the upstream end and the downstream end in communication with the source of cooling fluid; the first convective cooling channel comprising at least one further inlet portion comprising the further first inlet, and at least one further bent portion arranged between the further inlet portion and the main portion; wherein in the further inlet portion the cooling fluid flows in the first direction.

According to an embodiment of the present invention, the inlet portion and the further inlet portion are substantially identical.

According to an embodiment of the present invention, the bent portion and the further bent portion are substantially identical.

According to another aspect of the invention, there is provided a gas turbine plant comprising:
a compressor, extending along a main axis;
a plurality of can combustors, circumferentially arranged about the main axis;
a turbine;
wherein at least one of the can combustors comprises a transition duct as defined above.

### BRIEF DESCRIPTION OF THE DRAWINGS

The present invention will now be described with reference to the accompanying drawings, which show some non-limiting embodiment thereof, in which:
- Figure 1 is a schematic section view of a portion of a gas turbine plant (cut along an axial longitudinal plane), with parts removed for clarity, according to the present invention;
- Figure 2 is a schematic section view, with parts removed for clarity, of a portion of a combustor assembly of the gas turbine plant of figure 1 according to the present invention;
- Figure 3 is a perspective section view, with parts removed for clarity, of a transition duct of the gas turbine plant of figure 1 according to the present invention;
- Figure 4 is a perspective enlarged section view, with parts removed for clarity, of a first detail of the transition duct of figure 2;
- Figure 5 is a perspective view, with parts removed for clarity, of a second detail of the transition duct of figure 2;
- Figure 6 is a top view, with parts removed for clarity, of the second detail of figure 4;
- Figure 7 is a perspective top section view, with parts removed for clarity, of a third detail of the transition duct of figure 2.

### DETAILED DESCRIPTION OF EXEMPLARY EMBODIMENTS

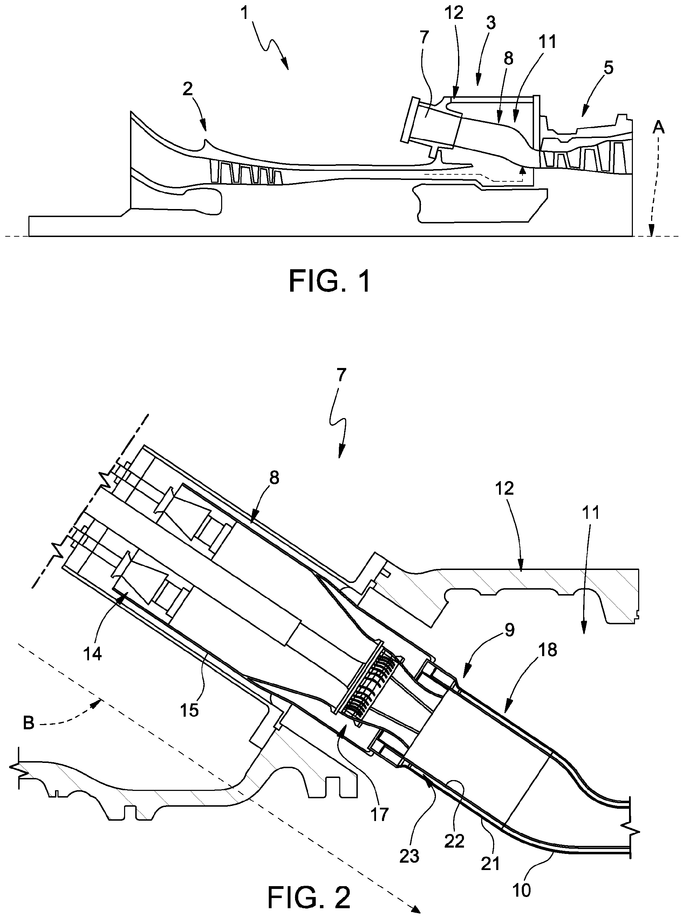

Figure 1 shows a simplified view of a portion of a gas turbine plant, designated as whole with numeral 1. The gas turbine plant 1 comprises a compressor 2, a combustor assembly 3 and a turbine 5. The compressor 2 and the turbine 5 extend along a main axis A. The combustor assembly 3 may be a sequential combustor assembly, as in the example of figure 1, or a single-stage combustor assembly. In one embodiment, the combustor assembly 3 comprises a plurality of sequential can combustors 7, circumferentially arranged about the main axis A.

The compressor 2 of the gas turbine engine 1 provides a compressed airflow to the combustor assembly 3. In the combustor assembly 3 the air is added with fuel and burned in. The airflow delivered by the compressor 2 is supplied also to the combustor assembly 3 and to the turbine 5 for the purpose of cooling.

In detail, the compressed air leaving the compressor 2 flows into a plenum 11, i.e. a closed volume delimited by an outer casing 12, and from there into the combustor assembly 3.

Each of the can combustors 7, one of which is shown in figure 2, comprises a first-stage combustor 8 and a second-stage combustor 9 and a transition duct 10, sequentially arranged.

More specifically, the first-stage combustor 8 comprises a first-stage burner unit 14 and a first-stage combustion chamber 15.

The second-stage combustor 9 is arranged downstream of the first-stage combustor 8 and includes a second-stage burner unit 17 and a second-stage combustion chamber 18. The second-stage combustor 9 is coupled to the turbine section 5, here not shown, through the transition duct 10.

The second-stage combustion chamber 18 extends along an axial direction downstream of the first-stage combustor 8. In one embodiment, the second-stage combustion chamber 18 comprises an outer liner 21 and inner liner 22. The outer liner 21 surrounds the inner liner 22 at a distance therefrom, so that a convective cooling channel 23 is defined between the outer liner 21 and the inner liner 22.

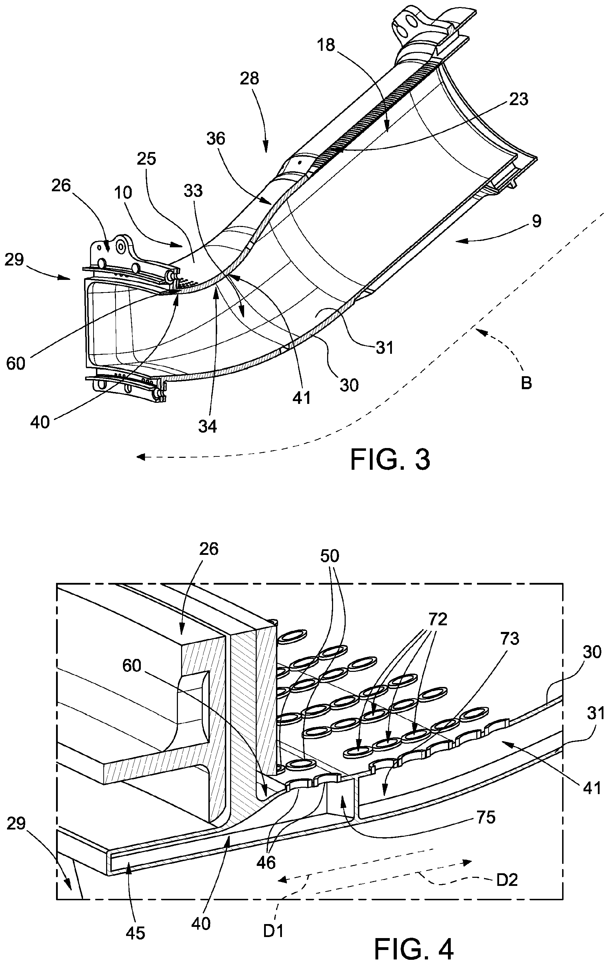

The transition duct 10 is illustrated in greater detail in figure 3 and comprises a tubular body 25 extending in an axial longitudinal direction B and a picture frame 26.

The tubular body 25 has an upstream end 28, a downstream end 29, an outer wall 30 and an inner wall 31.

The upstream end 28 is coupled to a combustor 9 and the downstream end 29 is coupled to the turbine 5 (see figure 1). In the non-limiting example here disclosed and illustrated, the upstream end 28 is coupled to the second-stage combustion chamber 18 of the second-stage combustor 9.

The inner wall 31 defines a transition channel 33 and an inner surface 34 facing the transition channel 33. The inner surface 34 is therefore directly exposed to hot gas flowing through transition channel 33.

The outer wall 30 defines an outer surface 36, which faces the plenum 11.

The tubular body 25 comprises a plurality of first convective cooling channels 40 arranged between the inner wall 31 and the outer wall 30.

In the non-limiting embodiment here disclosed and illustrated, a plurality of second convective cooling channels 41 are also arranged between the inner wall 31 and the outer wall 30.

Preferably, the plurality of first convective cooling channels 40 and the plurality of second convective cooling channels 41 extends between the inner wall 31 and the outer wall 30. In other words, the inner wall 31 and the outer wall 30 partially define the boundaries of the first convective cooling channels 40 and of the second convective cooling channels 41.

The picture frame 26 is coupled to the outer surface 36 of the outer wall 30 at the downstream end 29.

With reference to figures 4-7, each first convective cooling channel 40 comprises an inlet portion 43, a main portion 44 and a bent portion 45 arranged between the inlet portion 43 and the main portion 44 and fluidly connecting the inlet portion 43 and the main portion 44. The inlet portion 43 comprises at least one inlet 46 made in the outer wall 30 between the upstream end 28 and the downstream end 29. The main portion 44 is provided with an outlet (not visible in the attached figures), which is preferably connected with the convective cooling channel 23 of the second-stage combustion chamber 18.

In the inlet portion 43, the cooling fluid flows in a first direction D1 from the upstream end 28 towards the downstream end 29, while in the main portion 44 the cooling fluid flows in a second direction D2 from the downstream end 29 towards the upstream end 28.

The bent portion 45 is preferably U-shaped.

Preferably, the change of direction of the cooling fluid is obtained thanks to the shape of the bent portion 45.

According to a variant not shown, the change of the direction of the flow can be obtained also with other deflecting means.

Preferably, the bent portion 45 is arranged at the downstream end 29 of the tubular body 25.

In the non-limiting example here disclosed and illustrated, the first convective cooling channel 40 comprises a further inlet portion 48 and a further bent portion 49 arranged between the further inlet portion 48 and the main portion 44 and fluidly connecting the further inlet portion 48 and the main portion 44. The further inlet portion 48 comprising a further inlet 50 made in the outer wall 30 between the upstream end 28 and the downstream end 29.

Preferably, the bent portion 45 and the further bent portion 49 are arranged side by side.

Preferably, the bent portion 45 and the further bent portion 49 are substantially identical.

More preferably, also the inlet portion 43 and the further inlet portion 48 are substantially identical.

According to a variant not illustrated, the bent portion 45 and the further bent portion 49 and the inlet portion 43 and the further inlet portion 48 are different from each other.

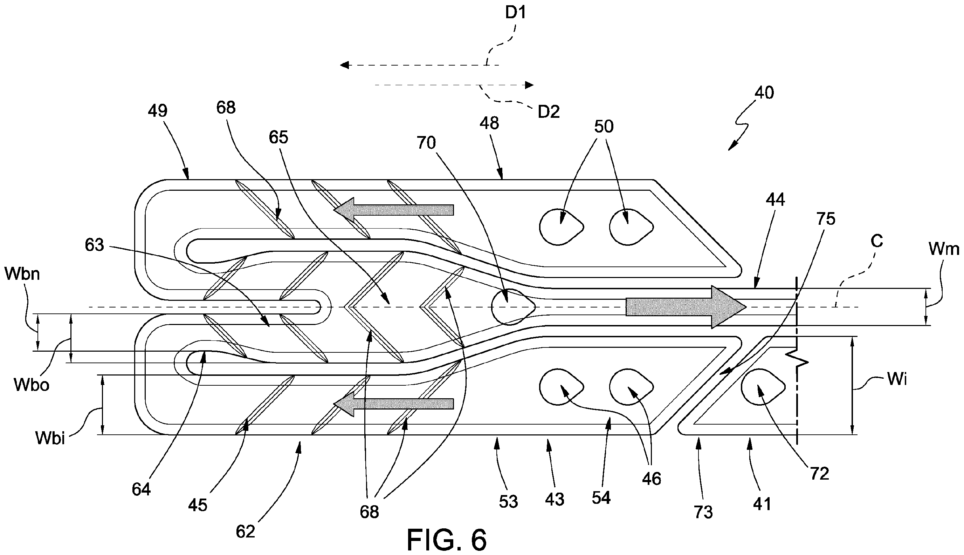

In the non-limiting embodiment here disclosed and illustrated, the further inlet portion 48 and the further bent portion 49 are arranged symmetrical respectively to the inlet portion 43 and the bent portion 45 with respect to an axis of extension C of the main portion 44. This is clearly evident from the view represented in figure 6.

Preferably, the inlet portion 43 and the further inlet portion 48 extend parallel to the axis of extension C of the main portion 44.

Preferably, the inlet portion 43 comprises two inlets 46, which are aligned along a direction parallel to the axis of extension C of the main portion 44. Analogously, also the further inlet portion 48 preferably comprises two further inlets 50, which are aligned along a direction parallel to the axis of extension C of the main portion 44.

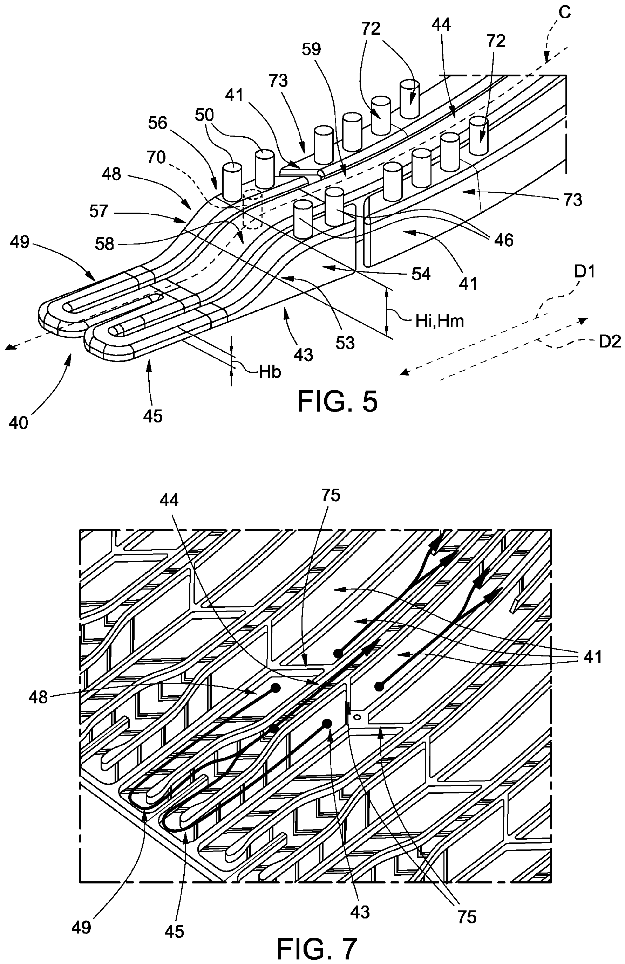

With reference to figure 5, the radial height Hi of at least one section 53 of the first inlet portion 43 of the first convective cooling channel 40 decreases along the first direction D1. In detail, the inlet portion 43 comprises a section 54 having a constant radial height Hi and a section 53 having a decreasing radial height Hi sequentially arranged along the first direction D1.

Preferably, in section 53 the radial height Hi decreases gradually.

As being identical in the example here illustrated, also the further inlet portion 48 comprises a section 56 having a constant radial height and a section 57 having a decreasing radial height sequentially arranged along the first direction D1.

With the definition "radial height" is intended the maximum internal distance between the inner wall 31 and the outer wall 30 inside the first convective cooling channel 40 or the second convective cooling channel 41.

The radial height Hb of the bent portion 45 is preferably constant.

As being identical in the example here illustrated, also the further bent portion 49 has a constant radial height.

The main portion 44 comprises a section 58 having an increasing radial height Hm along the second direction D2 of the main portion. Following section 58 along the direction D2, the main portion 44 comprises a section 59 wherein the radial height Hm is constant.

Preferably, the outer wall 30 has a constant thickness. In this way, the outer wall 30 is provided with an annular portion 60 (figure 4) of the outer surface 36 having a decreasing height following the shape of the inlet portion 43, of the further inlet portion 48 and of the main portion of the first convective cooling channels 40. The picture frame 26 is preferably coupled to said annular portion 60 of the outer surface 36.

With reference to figure 6, the inlet portion 43 preferably is configured so as the section 54 has a constant width Wi, while the section 53 has a decreasing width along the first direction D1.

With the definition "width" is intended the maximum internal distance between the lateral walls of the first convective cooling channel 40.

Preferably, in the inlet portion 43 the radial height Hi is in the same range as the width Wi.

Preferably, at least in section 59 of the main portion 44 the radial height Hm is in the same range as the width Wm.

The bent portion 45 comprises a first section 62, neighbouring the inlet portion 43, which has a constant width Wbi, and a second section 63, neighbouring the main portion 44, having a width Wbo, which is preferably lower than the width Wbi of the first section 65.

The second section 63 preferably comprises a narrowing 64 having a width Wbn, which is lower than the width Wbo.

Preferably, in the bent portion 45 the radial height Hb is lower than the widths Wbi Wbn Wbo above defined.

More preferably, in the bent portion 45 the radial height Hb is 2 times lower than the widths Wbi Wbn Wbo.

In the non-limitative example here disclosed and illustrated, the further inlet portion 48 and the further bent portion 49 have the same structure of the inlet portion 43 and of the bent portion 45.

Analogously, in the further bent portion 49 the radial height Hb is lower than the widths Wbi Wbn Wbo above defined.

As clearly visible from the view of figure 6, the second sections 63 of the bent portion 45 and of the further bent portion 49 preferably join to form a single common outlet channel 65 that flows into the main portion 44.

The bent portion 45 is preferably provided with a plurality of fins 68, extending transversally to flow directions D1 and D2 and configured to create turbulence in the cooling flow flowing in the bent portion 45.

In detail, fins 68 promote a secondary vortex in the cooling flow to obtain additional cooling efficiency.

In other words, the fins 68 are angled with respect to the axis C, which is parallel to the flow directions D1 and D2 the example here disclosed and illustrated.

Preferably the fins 68 forms an angle with the flow direction comprised between 30° and 60°. In the non-limiting example here disclosed and illustrated the angle is 45°.

Preferably, the fins 68 are fixed to the inner wall 31.

More preferably, the fins 68 have a radial height, which is lower than the radial height of the respective channel portion.

In the inlet portion 45 and in the further inlet portion 48, in the bent portion 45 and in the further bent portion 49 the fins 68 have a radial height comprised between 10%-150 of the radial height of the respective channel portion.

In section 59 of the main portion 44, the fins 68 have a radial height comprised between 40-60 of the radial height of the respective channel portion.

In the first section 62 the fins 68 are arranged symmetrical to the fins 68 in the second section 63 with respect to a direction parallel to axis C and passing on the wall separating the first section 62 and the second section 63. In other words, the fins 68 in the first section 62 are inclined opposite to the fins 68 in the second section 63.

As in the example here illustrated the further bent portion 49 is identical to the bent portion 45, in the single common outlet channel 65 the fins 68 forms are arranged in a V-shaped fashion to not destroy the secondary vortex flow field.

Preferably, the single common outlet channel 65 is provided with an additional inlet hole 70 to improve heat transfer coefficient at the exit of the bent portion 45 and of the further bent portion 49 and to modify/adjust the air flow through the bent portion 45 and of the further bent portion 49 overall.

If the additional inlet hole 70 is large (range of 3-5mm diameter), an additional impingement cooling common in the outlet channel 65 is obtained; while if the hole is small (1-3mm diameter), more mass flow through the bent portion 45 and the further bent portion 49 is obtained.

In other words, the dimensioning of the additional inlet hole 70 is used to fine-tune the heat transfer at the downstream end 29 of the transition duct 10.

Referring to figures 4 and 5, second convective cooling channels 41 are preferably arranged contiguous to the inlet portion 43 and to further inlet portion 48 of the first convective cooling channel.

Preferably, the second convective cooling channels 41 are aligned with the respective inlet portion 43/further inlet portion 48. More preferably, the second convective cooling channels 41 are aligned with the respective inlet portion 43/further inlet portion 48 along a direction parallel to the axis of extension C of the main portion 44.

In other words, the second convective cooling channels 41 and the main portion are extending parallel.

The second convective cooling channels 41 are provided with second inlets 72 arranged in a second inlet portion 73.

Preferably, the second inlet portion 73 is arranged close to the respective inlet portion 43 or to the respective further inlet portion 48.

The second convective cooling channels 41 are preferably separated from the first convective cooling channels 40.

With reference to figure 6 and 7, the second convective cooling channels 41 are separated from the respective inlet portion 43 or to the respective further inlet portion 48 by a separating wall 75, which is preferably transverse to the axis of extension C.

In the example here disclosed and illustrated, the axis of extension C follows substantially the shape of the transition duct 10 and therefore it is not rectilinear.

The transition duct 10, in fact, extends along the axial longitudinal direction B but a final portion near the downstream end 29, which is curved.

According to a variant not illustrated, the main portion 44, the inlet portion 43, the further inlet portion 48, the second convective cooling channels 41 may extend along a different path between the upstream end 28 and the downstream end 29 of the transition duct 10 in order to provide desired cooling action.

Finally, it is evident that the described transition duct may be subject to modifications and variations, without departing from the scope of the present invention, as defined in the appended claims.

In particular, any other component of the hot gas path in the combustor assembly may have the structure described above, with a tubular structure and cooling channels extending in the tubular structure. In one embodiment not illustrated, for example, the second-stage combustion chamber may have the same structure as the transition duct, with the cooling channels of the second-stage combustion chamber fluidly coupled to respective cooling channels of the transition duct. The second-stage combustion chamber and the transition duct may be formed in a single monolithic body.

## Claims

1. A gas turbine plant transition duct (10) comprising:
a tubular body (25) having an upstream end (28) configured to be coupled to a combustor (9) of a gas turbine plant (1) and a downstream end (20) configured to be coupled to a turbine (5) of the gas turbine plant (1); the tubular body (25) comprising:
an outer wall (30);
an inner wall (31) defining a transition channel (33);
at least one first convective cooling channel (40) arranged between the inner wall (31) and the outer wall (30); the at least one first convective cooling channel (40) having at least one first inlet (46; 50) made in the outer wall (30) between the upstream end (28) and the downstream end (29) in communication with a source of cooling fluid (11); the at least one first convective cooling channel (40) comprising at least one inlet portion (43; 48) comprising the at least one first inlet (46; 50), a main portion (44) and at least one bent portion (45; 49) arranged between the at least one inlet portion (43; 48) and the main portion (44); wherein in the at least one inlet portion (43; 48) the cooling fluid flows in a first direction (D1) and in the main portion (44) the cooling fluid flows in a second direction (D2) different from the first direction (D1);wherein the first direction (D1) is from the upstream end (28) towards the downstream end (29) and the second direction (D2) is from the downstream end (29) towards the upstream end (28); **characterised in that**
the bent portion (45; 49) is arranged at the downstream end (29).

2. The transition duct according to anyone of the foregoing claims, wherein a radial height (Hi) of at least one section (53) of the at least one inlet portion (43; 48) of the at least one first convective cooling channel (40) decreases along the first direction (D1); wherein the radial height is the maximum internal distance between an inner wall (31) and an outer wall (30) inside the at least one first convective cooling channel (40).

3. The transition duct according to claim 2, comprising a frame (26) coupled to a portion (60) of an outer surface (36) of the outer wall (30) of the tubular body (25); the portion (60) of the outer surface (36) being arranged at the section (53) of the at least one inlet portion (43; 48) of the at least one first convective cooling channel (40).

4. The transition duct according to claim 2 or 3, wherein the at least one inlet portion (43; 48) comprises a further section (54) having a constant radial height (Hi); the further section (54) being upstream the section (53) along the first direction (D1) and comprising the at least one first inlet (46; 50).

5. The transition duct according to anyone of the foregoing claims, wherein a radial height (Hb) of the bent portion (45; 49) is constant.

6. The transition duct according to anyone of the foregoing claims, wherein a radial height (Hb) of the bent portion (45; 49) is lower than a width (Wbi, Wbn, Wbo) of the bent portion (45; 49); wherein the width is the maximum internal distance between lateral walls of the at least one first convective cooling channel (40).

7. The transition duct according to anyone of the foregoing claims, wherein a radial height (Hm) of the main portion (44) is in the same range as a width (Wm) of the main portion (44).

8. The transition duct according to anyone of the foregoing claims, wherein the at least one bent portion (45; 49) is substantially U-shaped.

9. The transition duct according to anyone of the foregoing claims, wherein the at least one inlet portion (43; 48) and the main portion (44) extend substantially parallel.

10. The transition duct according to anyone of the foregoing claims, wherein the at least one bent portion (45; 48) is provided with a plurality of fins (68), extending transversally to the first direction (D1) and to the second direction (D2).

11. The transition duct according to anyone of the foregoing claims, wherein the at least one first convective cooling channel (40) comprises at least one further first inlet (50; 46) made in the outer wall (30) between the upstream end (28) and the downstream end (29) in communication with the source of cooling fluid (11); the at least one first convective cooling channel (40) comprising at least one further inlet portion (48; 43) comprising the at least one further first inlet (50; 46), and at least one further bent portion (49; 45) arranged between the at least one further inlet portion (48; 43) and the main portion (44); wherein in the at least one further inlet portion (48; 43) the cooling fluid flows in the first direction (D1).

12. The transition duct according to claim 11, wherein the at least one inlet portion (43; 48) and the at least one further inlet portion (48; 43) are substantially identical and/or the at least one bent portion (45; 49) and the at least one further bent portion (49; 45) are substantially identical.

13. A gas turbine plant comprising:
a compressor (2), extending along a main axis (A);
a plurality of can combustors (7), circumferentially arranged about the main axis (A);
a turbine (5);
wherein at least one of the can combustors (7) comprises a transition duct (10) according to any one of the preceding claims.

## Patentansprüche

1. Gasturbinenanlagen-Überströmleitung (10), umfassend:
einen röhrenartigen Körper (25), der ein stromaufwärts gelegenes Ende (28), das dazu konfiguriert ist, mit einer Brennkammer (9) einer Gasturbinenanlage (1) verbunden zu werden, und ein stromabwärts gelegenes Ende (29) hat, das dazu konfiguriert ist, mit einer Turbine (5) der Gasturbinenanlage (1) verbunden zu werden; wobei der röhrenartige Körper (25) umfasst:
eine Außenwand (30);
eine Innenwand (31), die einen Überströmkanal (33) definiert;
mindestens einen ersten Konvektionskühlkanal (40), der zwischen der Innenwand (31) und der Außenwand (30) angeordnet ist; wobei der mindestens eine erste Konvektionskühlkanal (40) mindestens einen ersten Einlass (46; 50) hat, der in der Außenwand (30) zwischen dem stromaufwärts gelegenen Ende (28) und dem stromabwärts gelegenen Ende (29) in Kommunikation mit einer Quelle von Kühlfluid (11) hergestellt ist; wobei der mindestens eine erste Konvektionskühlkanal (40) mindestens einen Einlassteil (43; 48) umfasst, der den mindestens einen ersten Einlass (46; 50), einen Hauptteil (44) und mindestens einen gebogenen Teil (45; 49) umfasst, der zwischen dem mindestens einen Einlassteil (43; 48) und
dem Hauptteil (44) angeordnet ist; wobei in dem mindestens einen Einlassteil (43; 48) das Kühlfluid in einer ersten Richtung (D1) strömt und in dem Hauptteil (44) das Kühlfluid in einer zweiten Richtung (D2) strömt, die sich von der ersten Richtung (D1) unterscheidet;
wobei die erste Richtung (D1) von dem stromaufwärts gelegenen Ende (28) zum stromabwärts gelegenen Ende (29) weist und die zweite Richtung (D2) von dem stromabwärts gelegenen Ende (29) zum stromaufwärts gelegenen Ende (28) weist; **dadurch gekennzeichnet, dass**
der gebogene Teil (45; 49) an dem stromabwärts gelegenen Ende (29) angeordnet ist.

2. Überströmleitung gemäß einem der vorhergehenden Ansprüche, wobei eine radiale Höhe (Hi) mindestens eines Abschnitts (53) des mindestens einen Einlassteils (43; 48) des mindestens einen ersten Konvektionskühlkanals (40) entlang der ersten Richtung (D1) abnimmt; wobei die radiale Höhe der maximale innere Abstand zwischen einer Innenwand (31) und einer Außenwand (30) innerhalb des mindestens einen ersten Konvektionskühlkanals (40) ist.

3. Überströmleitung gemäß Anspruch 2, umfassend einen Rahmen (26), der mit einem Teil (60) einer Außenoberfläche (36) der Außenwand (30) des röhrenartigen Körpers (25) verbunden ist; wobei der Teil (60) der Außenoberfläche (36) an dem Abschnitt (53) des mindestens einen Einlassteils (43; 48) des mindestens einen ersten Konvektionskühlkanals (40) angeordnet ist.

4. Überströmleitung gemäß Anspruch 2 oder 3, wobei der mindestens eine Einlassteil (43; 48) einen weiteren Abschnitt (54) umfasst, der eine konstante radiale Höhe (Hi) hat; wobei der weitere Abschnitt (54) entlang der ersten Richtung (D1) stromaufwärts von dem Abschnitt (53) gelegen ist und den mindestens einen ersten Einlass (46; 50) umfasst.

5. Überströmleitung gemäß einem der vorhergehenden Ansprüche, wobei eine radiale Höhe (Hb) des gebogenen Teils (45; 49) konstant ist.

6. Überströmleitung gemäß einem der vorhergehenden Ansprüche, wobei eine radiale Höhe (Hb) des gebogenen Teils (45; 49) niedriger als eine Breite (Wbi, Wbn, Wbo) des gebogenen Teils (45; 49) ist; wobei die Breite der maximale innere Abstand zwischen Seitenwänden des mindestens einen ersten Konvektionskühlkanals (40) ist.

7. Überströmleitung gemäß einem der vorhergehenden Ansprüche, wobei eine radiale Höhe (Hm) des Hauptteils (44) in demselben Bereich wie eine Breite (Wm) des Hauptteils (44) ist.

8. Überströmleitung gemäß einem der vorhergehenden Ansprüche, wobei der mindestens eine gebogene Teil (45; 49) im Wesentlichen U-förmig ist.

9. Überströmleitung gemäß einem der vorhergehenden Ansprüche, wobei der mindestens eine Einlassteil (43; 48) und der Hauptteil (44) sich im Wesentlichen parallel erstrecken.

10. Überströmleitung gemäß einem der vorhergehenden Ansprüche, wobei der mindestens eine gebogene Teil (45; 49) mit einer Mehrzahl von Rippen (68) ausgestattet ist, die sich quer zur ersten Richtung (D1) und zur zweiten Richtung (D2) erstrecken.

11. Überströmleitung gemäß einem der vorhergehenden Ansprüche, wobei der mindestens eine erste Konvektionskühlkanal (40) mindestens eine weiteren ersten Einlass (50; 46) umfasst, der in der Außenwand (30) zwischen dem stromaufwärts gelegenen Ende (28) und dem stromabwärts gelegenen Ende (29) in Kommunikation mit der Quelle von Kühlfluid (11) hergestellt ist; wobei der mindestens eine erste Konvektionskühlkanal (40) mindestens einen weiteren Einlassteil (48; 43), der den mindestens einen weiteren Einlass (50; 46) umfasst, und mindestens einen weiteren gebogenen Teil (49; 45) umfasst, der zwischen dem mindestens einen weiteren Einlassteil (48; 43) und dem Hauptteil (44) angeordnet ist; wobei in dem mindestens einen weiteren Einlassteil (48; 43) das Kühlfluid in der ersten Richtung (D1) strömt.

12. Überströmleitung gemäß Anspruch 11, wobei der mindestens eine Einlassteil (43; 48) und der mindestens eine weitere Einlassteil (48; 43) im Wesentlichen identisch sind und/oder der mindestens eine gebogene Teil (45; 49) und der mindestens eine weitere gebogene Teil (49; 45) im Wesentlichen identisch sind.

13. Gasturbinenanlage, umfassend:
einen Kompressor (2), der sich entlang einer Hauptachse (A) erstreckt;
eine Mehrzahl von Rohrbrennkammern (7), die im Umkreis um die Hauptachse (A) angeordnet sind;
eine Turbine (5);
wobei mindestens eine der Rohrbrennkammern (7) eine Überströmleitung (10) gemäß einem der vorhergehenden Ansprüche umfasst.

## Revendications

1. Conduit de transition de
centrale à turbines à gaz (10) comprenant :
un corps tubulaire (25) doté d'une extrémité en amont (28) configurée pour être couplée à une chambre de combustion (9) d'une centrale à turbines à gaz (1) et une extrémité en aval (20) configurée pour être couplée à une turbine (5) de la centrale à turbines à gaz (1) ; le corps tubulaire (25) comprenant :
une paroi extérieure (30) ;
une paroi intérieure (31) définissant un canal de transition (33) ;
au moins un premier canal de refroidissement par convection (40) disposé entre la paroi intérieure (31) et la paroi extérieure (30) ; le au moins un premier canal de refroidissement par convection (40) présentant au moins une première entrée (46 ; 50) pratiquée dans la paroi extérieure (30) entre l'extrémité en amont (28) et l'extrémité en aval (29) en communication avec une source de fluide de refroidissement (11) ; le au moins un premier canal de refroidissement par convection (40) comprenant au moins une partie d'entrée (43 ; 48) comprenant la au moins une première entrée (46 ; 50), une partie principale (44) et au moins une partie courbée (45 ; 49) disposée entre la au moins une partie d'entrée (43 ; 48) et la partie principale (44) ; dans lequel, dans l'au moins une partie d'entrée (43 ; 48), le fluide de refroidissement circule dans une première direction (D1) et dans la partie principale (44), le fluide de refroidissement circule dans une deuxième direction (D2) différente de la première direction (D1) ; dans lequel la première direction (D1) va de l'extrémité en amont (28) vers l'extrémité en aval (29) et la deuxième direction (D2) va de l'extrémité en aval (29) vers l'extrémité en amont (28) ; **caractérisé par le fait que** la partie courbée (45 ; 49) est disposée
à l'extrémité en aval (29).

2. Conduit de transition selon l'une quelconque des revendications précédentes, dans lequel une hauteur radiale (Hi) d'au moins une section (53) de la au moins une partie d'entrée (43 ; 48) de l'au moins un premier canal de refroidissement par convection (40) diminue le long de la première direction (D1) ; dans lequel la hauteur radiale est la distance interne maximale entre une paroi interne (31) et une paroi externe (30) à l'intérieur de l'au moins un premier canal de refroidissement par convection (40).

3. Conduit de transition selon la revendication 2, comprenant un cadre (26) couplé à une partie (60) d'une surface extérieure (36) de la paroi extérieure (30) du corps tubulaire (25) ; la partie (60) de la surface extérieure (36) étant disposée au niveau de la section (53) de la au moins une partie d'entrée (43 ; 48) de l'au moins un premier canal de refroidissement par convection (40).

4. Conduit de transition selon la revendication 2 ou 3, dans lequel la au moins une partie d'entrée (43 ; 48) comprend une autre section (54) présentant une hauteur radiale constante (Hi) ; l'autre section (54) est en amont de la section (53) le long de la première direction (D1) et comprend la au moins une première entrée (46 ; 50).

5. Conduit de transition selon l'une quelconque des revendications précédentes, dans lequel une hauteur radiale (Hb) de la partie courbée (45 ; 49) est constante.

6. Conduit de transition selon l'une quelconque des revendications précédentes, dans lequel une hauteur radiale (Hb) de la partie courbée (45 ; 49) est inférieure à une largeur (Wbi, Wbn, Wbo) de la partie courbée (45 ; 49) ; dans lequel la largeur est la distance interne maximale entre les parois latérales du au moins un premier canal de refroidissement par convection (40).

7. Conduit de transition selon l'une quelconque des revendications précédentes, dans lequel la hauteur radiale (Hm) de la partie principale (44) est du même ordre que la largeur (Wm) de la partie principale (44).

8. Conduit de transition selon l'une quelconque des revendications précédentes, dans lequel la au moins une partie courbée (45 ; 49) est sensiblement en forme de U.

9. Conduit de transition selon l'une quelconque des revendications précédentes, dans lequel la au moins une partie d'entrée (43 ; 48) et la partie principale (44) s'étendent sensiblement parallèlement.

10. Conduit de transition selon l'une quelconque des revendications précédentes, dans lequel la au moins une partie courbée (45 ; 48) est pourvue d'une pluralité d'ailettes (68), s'étendant transversalement à la première direction (D1) et à la seconde direction (D2).

11. Conduit de transition selon l'une quelconque des revendications précédentes, dans lequel l'au moins un premier canal de refroidissement par convection (40) comprend au moins une autre première entrée (50 ; 46) pratiquée dans la paroi extérieure (30) entre l'extrémité en amont (28) et l'extrémité en aval (29) en communication avec la source de fluide de refroidissement (11) ; le au moins un premier canal de refroidissement par convection (40) comprend au moins une autre partie d'entrée (48 ; 43) comprenant au moins une autre première entrée (50 ; 46), et au moins une autre partie courbée (49 ; 45) disposée entre au moins une autre partie d'entrée (48 ; 43) et la partie principale (44) ; dans lequel, dans la au moins une autre partie d'entrée (48 ; 43), le fluide de refroidissement s'écoule dans la première direction (D1).

12. Conduit de transition selon la revendication 11, dans lequel la au moins une partie d'entrée (43 ; 48) et la au moins une autre partie d'entrée (48 ; 43) sont sensiblement identiques et/ou la au moins une partie courbée (45 ; 49) et la au moins une autre partie courbée (49 ;45) sont sensiblement identiques.

13. Centrale à turbines à gaz comprenant :
un compresseur (2) s'étendant le long d'un axe principal (A) ;
une pluralité de chambres de combustion (7), disposées circonférentiellement autour de l'axe principal (A) ;
une turbine (5) ;
dans laquelle au moins l'une des chambres de combustion (7) comprend un conduit de transition (10) selon l'une quelconque des revendications précédentes.
